# EUROPÄISCHE PATENTSCHRIFT

(11) **EP 1 097 772 B1**
(45) Veröffentlichungstag und Bekanntmachung des Hinweises auf die Patenterteilung: **31.03.2004**
(21) Anmeldenummer: 00121724.9
(22) Anmeldetag: 05.10.2000
(51) Int. Cl.: B23F 15/00

(54) **Erzeugung periodischer Strukturen auf rotationssymmetrischen Bauteilen**
Producing periodical structures on rotationally symmetric workpieces
Génération de structures périodiques sur des pièces ayant une symétrie de révolution

(30) Priorität: 04.11.1999 DE 19953089
(43) Veröffentlichungstag der Anmeldung: 09.05.2001
(73) Patentinhaber: DaimlerChrysler AG, 70567 Stuttgart (DE)
(72) Erfinder: Doerfel, Oliver, Dr., 73207 Plochingen (DE)

(56) Entgegenhaltungen:
- DE-A- 3 533 064
- DE-A- 4 401 199
- DE-C- 911 689
- DE-C- 4 122 460

## Beschreibung

Die Erfindung betrifft ein Verfahren zur Erzeugung eines periodischen Profils auf einem zumindest näherungsweise rotationssymmetrischen Rohling.

Viele rotationssymmetrische Bauteile weisen periodische Strukturen auf, die hochgenau erzeugt werden müssen. Beispiele hierfür sind Welle-Nabe-Verbindungen, bei denen die Welle im Verbindungsbereich mit einem hochgenau zu fertigenden Profil versehen wird, das in Zusammenbaulage in ein ebenfalls hochgenau zu fertigendes Profil der Nabe eingreift. Besonders hohe Ansprüche an die Genauigkeit der Konturerzeugung und die Oberflächenqualität der Fügeflächen stellen dabei solche Verbindungsprofile, bei denen in Zusammenbaulage große Kontaktflächen zwischen Welle und Nabe vorliegen, die Kraftübertragung also vornehmlich durch Reibschluß erfolgt (z.B. Polygonprofile oder Kreiskeilprofile). Die Herstellung solcher Bauteile erfolgt derzeit, wie in der DE 44 01 199 beschrieben, zum Beispiel mit Hilfe von Schleifverfahren, bei denen die Werkzeugbewegungen genau auf das zu fertigende Profil abgestellt werden müssen. Diese Herstellungsverfahren sind sehr zeitaufwendig und somit kostenintensiv. Daher besteht ein großer Bedarf an einem Verfahren, mit Hilfe dessen diese periodischen Strukturen schnell und kostengünstig hergestellt werden können.

Der Erfindung liegt daher die Aufgabe zugrunde, ein Verfahren vorzuschlagen, mit Hilfe dessen periodische Strukturen auf rotationssymmetrischen Bauteilen hochgenau, schnell und kostengünstig erzeugt werden können.

Die Aufgabe wird erfindungsgemäß durch die Merkmale des Anspruchs 1 gelöst.

Danach wird zur Erzeugung der periodischen Strukturen die Kinematik des Wälzschälens verwendet. Dieses Verfahren ist bereits seit langer Zeit bekannt, wurde aber bisher ausschließlich zur spanabhebenden Herstellung von evolventischen Außen- und Innenverzahnungen eingesetzt. Die Verwendung des Wälzschälens zur Erzeugung von Verzahnungen ist z.B. in der DE 35 33 064, der DE 39 15 976 und der DE 41 22 460 beschrieben.

Im Vergleich zu konkurrierenden Verfahren zur Herstellung periodischer Strukturen auf rotationssymmetrischen Bauteilen, wie z.B. Fräsen, Formfräsen, Räumen, Drehfräsen, Drehen oder Schleifen, sind die beim Wälzschälen entstehenden Späne bezüglich ihrer geometrischen Form und Spandicke besonders günstig, so daß eine besonders schnelle Bearbeitung des gewünschten Profils ermöglicht wird. Im Vergleich zu diesen konkurrierenden Verfahren ist daher beim Wälzschälen die Hauptzeit bei der Bearbeitung des Werkstücks besonders gering. Die Erzeugung des periodischen Profils erfolgt in einem einzigen Schnitt, auf den - zur Erhöhung der Qualität des Werkstücks - weitere Egalisierung- und Schlichtungsschnitte mit der gleichen Kinematik folgen können. Weiterhin sind nunmehr Werkzeugmaschinen verfügbar, die bei hohen Drehzahlen eine hochgenaue Abstimmung der Werkstück- mit der Werkzeugachse ermöglichen und somit gestatten, ein weites Spektrum unterschiedlicher periodischer Strukturen mit hoher Genauigkeit zu erzeugen. Die für ein spezifisches periodisches Muster benötigte Kontur des Werkzeugs, die u.U. sehr komplex ist, kann exakt aus der gewünschten Werkstückgeometrie berechnet werden. Das Wälzschälen eignet sich daher insbesondere zur Herstellung komplexer periodischer Strukturen auf näherungsweise rotationssymmetrischen Bauteilen, wie z.B. Keilwellen, Kreiskeilwellen, Polygonwellen, Ringgelenknaben und Gelenkringen (siehe Anspruch 2).

Um hohe Schnittgeschwindigkeiten und somit kurze Herstellungszeiten zu ermöglichen, ist es günstig, eine Werkzeugmaschine mit hochgenauen Achsen und hohen Umdrehungszahlen einzusetzen (siehe Patentanspruch 4). Im Interesse einer hohen Schnittgeschwindigkeit bei hoher Formtreue des gefertigten Werkstücks ist es weiterhin zweckmäßig, den Schrägungswinkel zwischen Werkstück und Werkzeug auf näherungsweise 20 Grad einzustellen (siehe Patentanspruch 5). Zudem ist es bei den beim Wälzschälen auftretenden hohen Schnittgeschwindigkeiten vorteilhaft, ein Werkzeug aus Hartmetall zu verwenden, das mit einer Verschleißschutzschicht versehen ist (siehe Patentanspruch 3).

Im folgenden wird die Erfindung anhand eines in den Zeichnungen dargestellten Ausführungsbeispieles näher erläutert; dabei zeigen:
- Fig. 1: eine schematische Seitenansicht eines Wälzschälsystems, dessen Schälkopf um einem Winkel zur Achse eines zu bearbeitenden Rohlings geschwenkt ist,
- Fig. 2: eine schematische Darstellung eines Rohlings mit Kreiskeilprofil und eines zu seiner Bearbeitung verwendeten Schälrades,
- Fig. 3: Beispiele weiterer durch Wälzschälen bearbeiteter Werkstücke:
Fig. 3a ein Gelenkring und
Fig. 3b eine Ringgelenknabe.

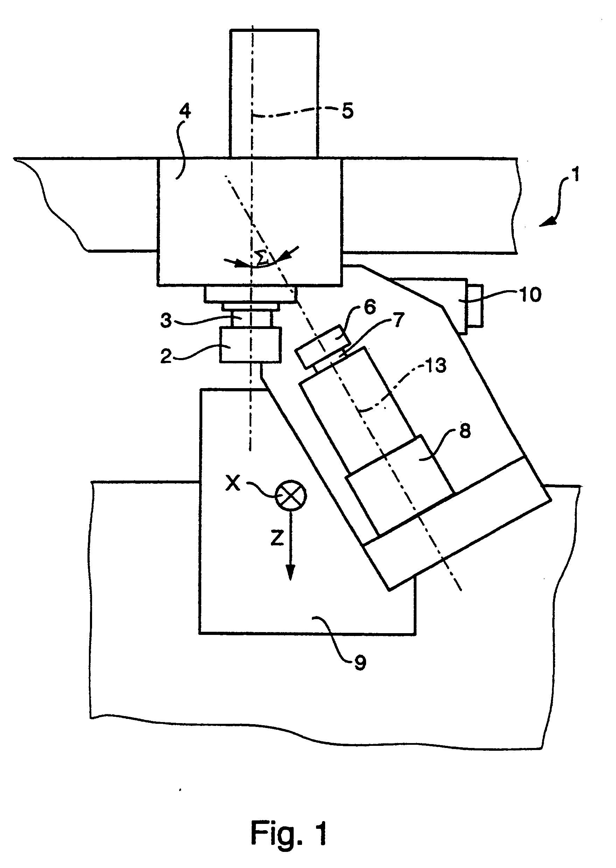

Figur 1 zeigt eine schematische Ansicht eines Wälzschälsystems 1 zur Bearbeitung eines näherungsweise rotationssymmetrischen Rohlings 2, der so auf dem Wälzschälsystem 1 in einer Werkstückspindel 3 einer Werkstückspindeleinheit 4 eingespannt ist, daß die Rotationsachse des Rohlings 2 näherungsweise parallel zur Spindelachse 5 ausgerichtet ist Als Bearbeitungswerkzeug wird ein Schälrad 6 verwendet, das in eine Werkzeugspindel 7 eines Schälkopfs 8 eingespannt ist. Der Schälkopf 8 ist mittels eines Axialschlittens 9 in Richtung der Z-Achse (d.h. parallel zur Werkstück-Spindelachse 5) verschiebbar und mittels eines auf dem Axialschlitten 9 befestigten Radialschlittens 10 in Richtung der X-Achse (senkrecht zur Werkstück-Spindelachse 5) verschiebbar; der Schälkopf 8 ist schwenkbar auf dem Radialschlitten 10 gelagert.

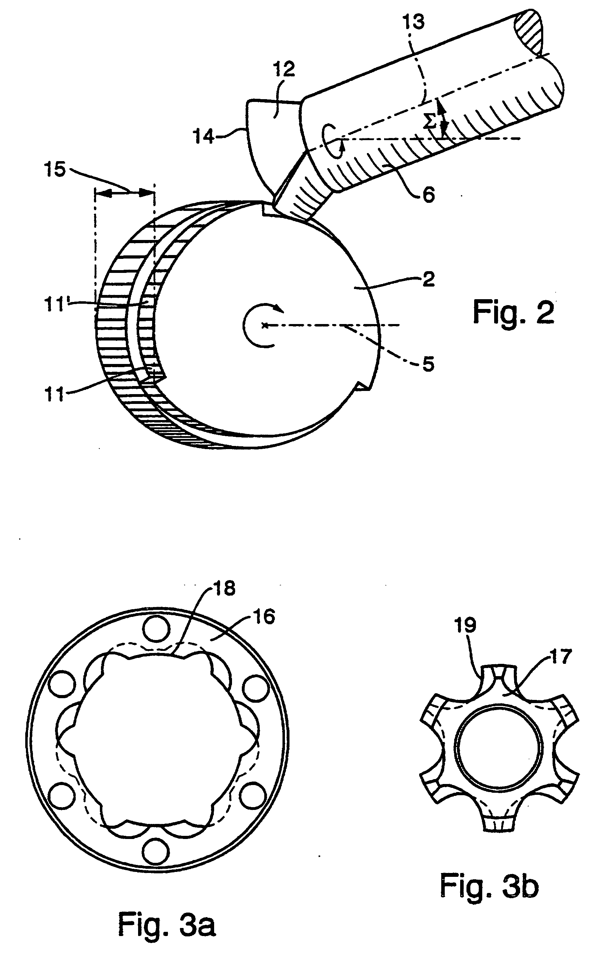

Zur Bearbeitung des Rohlings 2 führen, wie in Figur 2 gezeigt, sowohl das Schälrad 6 als auch der Rohling 2 Drehungbewegungen aus, die beide dieselbe Drehrichtung haben und unter windschiefen Drehachsen nach Art eines Schraubradgetriebes miteinander kämmen. Dabei drehen sich das Schälrad 6 und der Rohling 2 im umgekehrten Verhältnis zur jeweiligen Anzahl der zu erzeugenden periodischen Strukturen; soll beispielsweise auf dem Rohling 2 das in Figur 2 gezeigte dreizählige Kreiskeilprofil 11 hergestellt werden, und trägt das Schälrad 6, wie in Figur 2 gezeigt, eine Außenkontur 12, die einem Gegenprofil mit zwei Kreiskeilen entspricht, so muß die Drehzahl der Werkzeugspindel 7 1-½-mal so hoch sein wie die Drehzahl der Werkstückspindel 3.

Die Außenkontur 12 des Schälrads 6 ist - ausgehend von einer zylindrischen oder kegelförmigen Grundform - so auf das zu erzeugende Profil 11 auf dem Rohling 2 abgestimmt, daß das Schälrad 6 beim oben beschriebenen gegenseitigen Abwälzen von Rohling 2 und Schälrad 6 das gewünschte Profil 11 in den Rohling 2 einschneidet Die Spindelachsen 5 und 13 Rohlings 2 und des Schälrads 6 sind während der Bearbeitung um einen Achskreuzwinkel Σ zueinander geschwenkt. Zur Erzeugung eines hochgenauen periodischen Profils 11 einer vorgegebenen Geometrie auf dem Rohling 2 muß sichergestellt sein, daß die Spindelachsen 5,13 hochgenau aufeinander abgestimmt sind. Um eine hohe Schnittgeschwindigkeit zu erreichen, ist es günstig, einen möglichst großen Achskreuzwinkel Σ zu wählen; zur Herstellung von Kreiskeilprofilen 11' hat sich ein Achskreuzwinkel Σ im Bereich zwischen 15° und 25° als günstig herausgestellt. Weiterhin sind zur Erreichung einer hohen Schnittgeschwindigkeit hohe Umdrehungszahlen der Werkstück- und der Werkzeugspindeln 3,7 notwendig; die Umdrehungszahlen sollten zweckmäßigerweise bei mindestens 1000 bis 2000 Umdrehungen /min liegen.

Bei der Bearbeitung bewegt sich die Schneidkante 14 des Schälrads 6 auf den Rohling 2 zu und trägt dabei einen Span ab; hierdurch entsteht auf dem Rohling 2 an der bearbeiteten Stelle die endgültige Form des herzustellenden Profils 11. Zum Bearbeiten der gesamten axialen Breite 15 des Rohlings 2 wird das rotierende Schälrad 6 mittels des Axialschlittens 9 in Z-Richtung auf den Rohling 2 zubewegt. Während dieser Translationsbewegung wird das gesamte gewünschte Profil 11 auf dem Rohling 2 in nur einer einzigen Axialbewegung des Schälkopfes 8 gegenüber dem Rohling 2 hergestellt. Um auf dem Rohling 2 ein axialsymmetrisches Profil 11 herzustellen, muß hierbei eine parallele Bewegung der Mittellinie des Schälrads 6 gegenüber der Mittellinie des Rohlings 2 sichergestellt werden, was eine Differentialdrehung der beiden Spindelachsen 5,13 zueinander erforderlich macht.

Durch eine zusätzliche Überlagerung der Axialbewegung des Axialschlittens 9 mit einer Bewegung des Radialschlittens 10, d.h. durch eine Verschiebung des rotierenden Schälrades 6 in X-Richtung, kann der Rohling 2 zusätzlich mit einer Balligkeit bzw. mit einer Konizität versehen werden.

Das erfindungsgemäße Verfahren ermöglicht eine sehr zeitsparende Herstellung des Profils 11, weil die Drehzahlen der Werkzeugmaschine hohe Schnittgeschwindigkeit bei gutem Spanungsquerschnitt und günstiger Spanform erreichbar machen. Die Hauptzeit zur Erzeugung des Profils 11 kann somit gegenüber alternativen Verfahren wie Drehen, Fräsen etc. um einen Faktor zehn oder mehr reduziert werden. Um den Verschleiß des Schälrades 6 zu minimieren und somit hohe Standzeiten zu erreichen, empfiehlt es sich, ein Schälrad 6 aus Hartmetall mit einer Verschleißschutzschicht zu verwenden.

Zur Berechnung der benötigten Außenkontur 12 des Schälrads 6 muß die gesamte Kinematik des Wälzschälprozesses mitberücksichtigt werden. Die Außenkontur 12 des Schälrads 6 ist somit nicht formnegativ zu dem gewünschten Profil 11 auf dem Rohling 2, sondern ist ein verzerrtes Bezugsprofil, in das der Achskreuzwinkel Σ und sein Einfluß auf das gegenseitige Abrollen von Rohling 2 und Schälrad 6 explizit einbezogen wird. Um ein gutes Schneidergebnis zu erreichen, muß das Schälrad 6 gewisse Freiwinkel und Spanwinkel gegenüber dem Rohling 2 einschließen. Bei Verwendung eines zylindrischen Schälrads 6 kann ein Freiwinkel erreicht werden, indem ein Achsversatz bzw. ein Spanflächenversatz zwischen Schälrad 6 und Rohling 2 vorgesehen wird. Ein zylindrisches Schälrad 6 hat den weiteren Vorteil, daß hier beim Nachschärfen des Schälrads 6 die Werkzeugkontur erhalten bleibt.

Neben der oben beschriebenen Herstellung des in Figur 2 dargestellten dreizähligen Kreiskeilprofils 11' auf dem Rohling 2 können Kreiskeilprofile beliebiger Zähligkeiten hergestellt werden. Weiterhin kann das Wälzschälen zur Erzeugung beliebiger Wellenprofile wie z.B. Keilwellenprofile, Polygonprofile etc. auf Rohlingen angewendet werden. Darüberhinaus ermöglicht die erfindungsgemäße Verwendung des Wälzschälen die Herstellung beliebiger periodischer Strukturen auf näherungsweise rotationssymmetrischen Rohlingen und eignet sich für die Erzeugung sowohl von Außen- als auch Innenprofilen. Beispiele hierfür sind in Figur 3 dargestellt, die einen Gelenkring 16 und eine Ringgelenknabe 17 zeigt. Sowohl das Innenprofil 18 des Gelenkrings 16 als auch das Außenprofil 19 der Ringgelenknabe 17 sind mittels Wälzschälens herstellbar. Wie oben beschrieben, berechnen sich die Außenprofile 12 der dafür benötigten Schälräder 6 aus der Geometrie des gewünschten Innenprofils 17 bzw. Außenprofils 19 unter Berücksichtigung der Kinematik der gewählten Wälzschälgeometrie (Achskreuzwinkel Σ und Zähligkeiten der Symmetrieachse des jeweiligen Schälrads 6).

## Patentansprüche

1. Verwendung des Wälzschälens zur Erzeugung eines periodischen Profils (11,11',18,19), ausgenommen Flanken von Außen- und Innenverzahnungen, auf einem näherungsweise rotationssymmetrischen Rohling (2).

2. Verwendung nach Anspruch 1,
**dadurch gekennzeichnet,**
**daß** mittels des Wälzschälens ein Kreiskeilprofil (11') und/oder ein Keilwellenprofil und/oder ein Polygonwellenprofil und/oder ein Profil (18,19) eines Gelenkringes (16) und/oder einer Ringgelenknabe (17) hergestellt wird.

3. Verwendung nach Anspruch 1,
**dadurch gekennzeichnet,**
**daß** zur Bearbeitung des Rohlings (2) ein Schälrad (6) wird, dessen Schneiden aus Hartmetall bestehen und mit einer Verschleißschutzschicht versehen sind.

4. Verwendung nach einem der Ansprüche 1 bis 3,
**dadurch gekennzeichnet,**
**daß** zur Erzeugung des Profils (11,11',18,19) auf dem Rohling (2) Werkzeugspindel (7) und Werkstückspindel (3) mit Drehzahlen von mindestens 1000 bis 2000 Umdrehungen / min gedreht werden.

5. Verwendung nach einem der Ansprüche 1 bis 3,
**dadurch gekennzeichnet,**
**daß** zur Erzeugung des Profils (11,11',18,19) auf dem Rohling (2) das Schälrad (6) gegenüber dem Rohling (2) in einem Achskreuzwinkel (Σ) geführt wird, der zwischen 15° und 25° liegt.

## Claims

1. Use of skiving for the production of a periodic profile (11, 11', 18, 19), excluding flanks of outer and inner toothing, on a virtually rotationally symmetrical blank (2).

2. Use according to claim 1
**characterised in that**
by means of skiving a circular wedge profile (11') and / or a spine and / or a polygon shaft profile and / or a profile (18, 19) of a joint ring (16) and / or a ring joint hub (17) are produced.

3. Use according to claim 1
**characterised in that**
for the processing of the blank (2) a skiving wheel (6) is used whose blades consist of hard metal and are equipped with a wearing protective layer.

4. Use according to one of the claims 1 to 3
**characterised in that**
for the production of the profile (11, 11', 18, 19) on the blank (2) tool spindle (7) and work-piece spindle (3) with speeds of at least 1000 to 2000 rotations / min are rotated.

5. Use according to one of the claims 1 to 3
**characterised in that**
for the production of the profile (11, 11', 18, 19) on the blank (2) the skiving wheel (6) is guided opposite the blank (2) in an axis cross angle (Σ) which lies between 15° and 25°.

## Revendications

1. Utilisation du décolletage en développante pour la génération d'un profil périodique (11, 11', 18, 19), à l'exception des flancs des dentures externes et internes, sur une ébauche (2) approximativement rotationnellement symétrique.

2. Utilisation selon la revendication 1,
**caractérisée en ce que**,
au moyen du décolletage en développante, un profil cannelé circulaire (11') et/ou un profil d'arbre cannelé et/ou un profil d'arbre polygonal et/ou un profil (18, 19) d'un anneau articulé (16) et/ou d'un moyeu articulé annulaire (17) est/sont fabriqué(s).

3. Utilisation selon la revendication 1,
**caractérisée en ce que**,
pour le façonnage de l'ébauche (2), on utilise une roue de taillage, dont les lames sont en métal dur et munies d'une couche de protection contre l'usure.

4. Utilisation selon l'une quelconque des revendications 1 à 3,
**caractérisée en ce que**,
pour la génération du profil (11, 11', 18, 19) sur l'ébauche (2), une broche porte-outil (7) et une broche porte-pièce (3) ayant une vitesse de rotation d'au moins 1 000 à 2 000 tours/minute sont actionnées.

5. Utilisation selon l'une quelconque des revendications 1 à 3,
**caractérisée en ce que**,
pour la génération du profil (11, 11', 18, 19) sur l'ébauche(2), la roue de taillage (6) est amenée contre l'ébauche (2) dans un angle de coupe axial (Σ) compris entre 15° et 25°.
